Europäisches Patentamt

European Patent Office

Office européen des brevets

(11) Numéro de publication: **0 037 350**
**A1**

## (12) DEMANDE DE BREVET EUROPEEN

(21) Numéro de dépôt: **81420040.8**

(22) Date de dépôt: **19.03.81**

(51) Int. Cl.³: **A 22 C 17/00**
**A 23 B 4/00**

(30) Priorité: **21.03.80 FR 8007246**

(43) Date de publication de la demande:
**07.10.81 Bulletin 81/40**

(84) Etats contractants désignés:
**BE CH DE GB LI NL**

(71) Demandeur: **GETPLAST (Société à Responsabilité Limitée)**
**26, avenue de la Gare**
**F-69580 Sathonay-Camp(FR)**

(72) Inventeur: **Gengembre, Georges**
**9, rue de Bruxelles**
**F-69140 Rillieux la Pape(FR)**

(74) Mandataire: **Laurent, Michel et al,**
**Bureaux Chalin A1 20, rue Louis Chirpaz Boîte Postale 32**
**F-69130 Lyon-Ecully(FR)**

(54) Installation pour le stockage, la conservation et la transformation de produits alimentaires, notamment de la viande.

(57) Installation permettant le stockage, la conservation et la transformation de produits alimentaires, notamment de la viande, se présente sous la forme d'une enceinte fermée (1) du type comportant :
- une zone de stockage (3) de produit à transformer,
- un appareil (2) de transformation de ladite matière,
- une zone de réception (4) de la matière transformée à la sortie de l'appareil de traitement.
L'installation comporte des moyens (8, 9, 7, 6) permettant de créer une circulation d'air aseptisé qui enveloppe à la fois la zone de réserve (3) de matière et la zone de transformation (2-4).

FIG.1

INSTALLATION POUR LE STOCKAGE, LA CONSERVATION ET LA TRANS-
FORMATION DE PRODUITS ALIMENTAIRES, NOTAMMENT DE LA VIANDE.

La présente invention concerne un perfectionnement apporté aux techniques de stockage, de conservation et de transformation de produits alimentaires et plus particulièrement de viande.

Dans la suite de la description, l'invention sera décrite plus particulièrement appliquée à une installation permettant de fabriquer de la viande hâchée mais il est bien entendu que cela n'est pas limitatif et qu'elle pourrait également être utilisée pour d'autres applications telles que par exemple aux installations permettant la découpe de viande sous forme de tranches voire même à d'autres installations permettant de traiter les produits alimentaires quelconques.

L'un des problèmes qui se posent dans le cas du stockage, de la conservation et de la transformation de la viande est celui de la prolifération des bactéries qui rendent rapidement les produits impropres à la consommation. La solution couramment utilisée pour pallier cet inconvénient consiste à conserver les produits dans une ambiance réfrigérée qui, normalement devrait être inférieure à 0° Centigrades mais qui en général se trouve à une température comprise entre 4 et 6° Centigrades.

Même à cette température, il arrive fréquemment que les produits se détériorent.

Pour cette raison, il a été proposé, notamment dans le brevet français 1 132 319 d'associer aux chambres froides de conservation des moyens permettant de stériliser l'air ambiant à l'intérieur desdites chambres en créant une circulation d'air forcé faisant passer l'air sur une lampe à vapeur de mercure émettant des radiations ultraviolettes, l'air aseptisé étant dirigé en direction de la zone germicide, c'est-à-dire sur les aliments notamment la viande.

Cette technique utilisée dans les chambres froides de grande dimension n'a cependant jamais été appliquée aux installations permettant de stocker, transformer (par exemple hâcher ou découper) voire éventuellement de présenter le produit ainsi transformé et qui sont utilisées couramment dans les boucheries ou autres magasins de vente de produits alimentaires.

Cette non-application de la stérilisation de l'air à de tels appareils peut s'expliquer par le fait qu'il ne semblait pas possible d'avoir un maintien permanent de l'aseptisation dans toutes les zones de traitement sauf à prévoir des ensembles relativement complexes donc coûteux.

Ainsi, si l'on considère les ensembles permettant de hâcher de la viande (par exemple du type de ceux décrits dans le brevet des Etats-Unis d'Amérique 2 109 560) il aurait été certes possible d'appliquer cette technique d'aseptisation en prévoyant un système du type décrit dans le brevet français 1 132 319 dans la zone de hâchage et de présentation. Cependant, cela n'aurait pas permis d'éliminer les risques de contamination au niveau de l'amenée de la viande dans la goulotte d'alimentation. De plus, dans les appareils du type selon lesquels la matière transformée est récupérée en ouvrant une porte, l'entrée d'une grande quantité d'air ambiant à l'intérieur augmente également les risques de contamination au niveau de la zone de transformation.

Or, on a trouvé, et c'est ce qui fait l'objet de la présente invention, une installation simple, efficace, permettant le stockage, la conservation et la transformation de produits alimentaires, notamment de la viande, qui peut être utilisée aussi bien à température ambiante qu'à température réfrigérée et qui permet d'éliminer pratiquement totalement la profilération des bactéries nuisibles à la consommation.

D'une manière générale, l'installation conforme à l'invention se présente sous la forme d'une enceinte fermée du type comportant :
- une zone de stockage de produits à transformer,
- un appareil de transformation de ladite matière,

- une zone de réception de la matière transformée à la sortie de l'appareil de traitement,

ladite enceinte comportant un accès permettant d'introduire le produit dans l'appareil de transformation et un accès permettant de récupérer la matière transformée. L'appareil selon l'invention se caractérise par le fait qu'il comporte des moyens permettant de créer une circulation d'air aseptisé qui enveloppe à la fois la zone de réserve de matière, la partie active de l'appareil de transformation et la zone de réception.

Avantageusement, la circulation d'air aseptisé à l'intérieur de l'appareil est réalisée, conformément à l'invention, de telle sorte que cet air forme un écran évitant le contact de l'air ambiant avec la partie active de l'appareil de traitement et la zone de réception lors de l'ouverture ou de la récupération de matière traitée.

Cela est obtenu en créant un circuit continu d'air aseptisé qui passe au travers de la zone de stockage puis qui est recyclé, de bas en haut, en enveloppant l'ensemble de la zone de transformation.

Dans un mode de réalisation de l'invention selon lequel l'appareil de transformation de la matière est un hâchoir cette circulation d'air aseptisé est obtenue, d'une part en prévoyant dans la goulotte d'alimentation du hâchoir et éventuellement dans la zone de réserve qui l'entoure des perforations permettant un passage de l'air, des moyens d'aspiration étant prévus à l'entrée de cette zone et l'air étant recyclé en dessous du hâchoir de manière à être amené en dessous de la sortie pour former un écran qui enveloppe cette zone de transformation. Ainsi, lorsque l'on récupère la viande hâchée en vrac, par exemple en prévoyant une porte à l'avant de l'enceinte, le rideau d'air aseptisé évite que l'air ambiant se trouve en contact avec la sortie du hâchoir. Eventuellement, des déflecteurs peuvent être prévus en dessus et en dessous de l'orifice de sortie de l'appareil de traitement afin de bien canaliser le courant d'air aseptisé.

L'invention et les avantages qu'elle apporte seront cependant mieux compris grâce aux exemples de réalisation donnés ci-après à titre indicatif mais non limitatif et qui sont illustrés par les schémas annexés dans lesquels :

- la figure 1 illustre, schématiquement, en coupe, une installation conforme à l'invention permettant le hâchage de la viande, et montrant le circuit d'air aseptisé réalisé conformément à l'invention,

- la figure 2 illustre un autre exemple d'application dans lequel l'appareil de transformation est destiné à former des tranches par exemple de jambon, de viande...

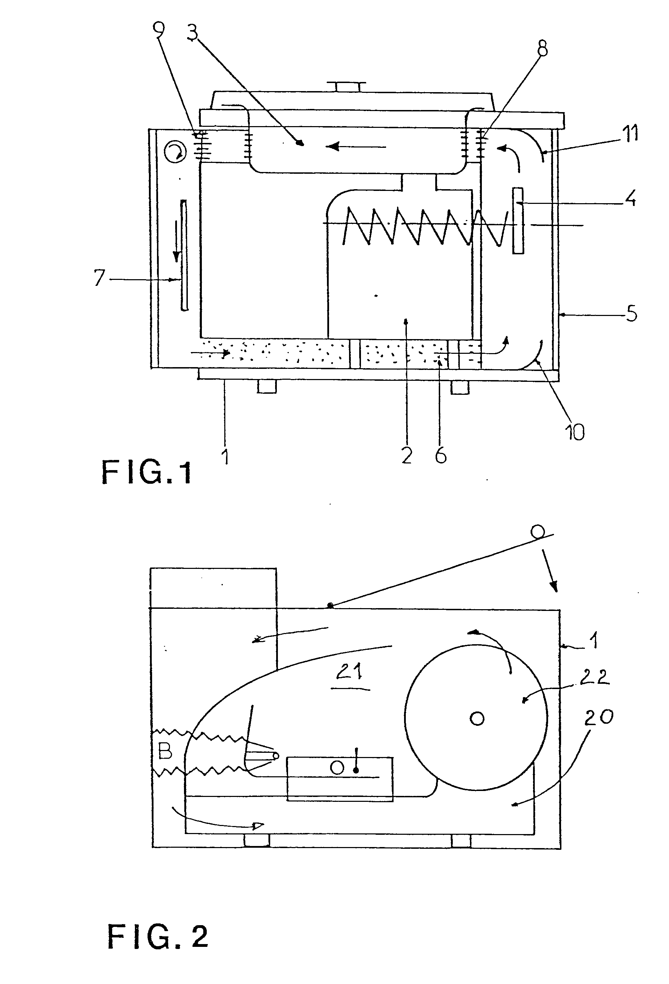

La figure 1 illustre un exemple de réalisation d'une installation conforme à l'invention permettant le stockage, le hâchage et la reconstitution sous forme de steak de viande hâchée.

Cette installation est constituée d'une enceinte 1, par exemple en acier inoxydable à l'intérieur de laquelle est disposé un hâchoir conventionnel du commerce 2.

Le stockage de la viande à transformer est réalisé dans la zone 3, dans la partie supérieure de l'enceinte, les parois de l'enceinte de stockage ainsi que celles de la goulotte d'alimentation du hâchoir étant perforées. A la sortie du hâchoir est disposé un ensemble reconstitueur de steaks hâchés 4 par exemple du type décrit dans la demande de brevet français n° 78/10313.

Avantageusement, la face avant 5 de l'enceinte se présente sous la forme de vitrine qui laisse visible le système reconstitueur 4. Sur le côté de l'enceinte, est ménagée une fente dans laquelle coulisse l'empreinte du reconstitueur 4.

Afin d'obtenir une circulation d'air conformément à l'invention qui enveloppe à la fois la zone de stockage 3 de la viande hâchée et la partie active de l'appareil de transformation 2 et la zone de réception 4, le hâchoir 2 est disposé à l'intérieur de l'enceinte 1 de manière à laisser un passage 6 s'étendant depuis l'arrière jusqu'à l'avant de l'installation.

- 5 -

L'aseptisation de l'air est obtenue de manière connue, par exemple au moyen d'un système à rayonnement ultra-violet 7 disposé à la partie arrière de l'enceinte 1.

Le fonctionnement d'une telle installation est le suivant. L'air contenu à l'intérieur de l'enceinte est appelé au travers des orifices prévus sur la face avant 8 de la zone de stockage de la matière, traverse toute cette zone puis, passe au travers des orifices 9 à l'arrière de la zone de stockage et est dirigé vers le bas où il est soumis au rayonnement ultra-violet 7 qui l'aseptise pour être enfin refoulé à la partie inférieure 6 et recyclé en enveloppant l'ensemble de la zone de transformation 4. Eventuellement, des déflecteurs 10, 11 peuvent être prévus pour faciliter la formation de ce rideau d'air aseptisé. De tels déflecteurs peuvent dans certains cas éviter de prévoir une face 5 fermant l'appareil, l'orifice du hâchoir débouchant alors directement à l'extérieur et la zone de transformation étant protégée de tout contact avec l'air ambiant grâce au rideau d'air aseptisé formé autour de lui.

En conséquence, grâce à l'invention, toute la viande contenue dans l'ensemble de l'appareil, dans le bac de réserve, dans le hâchoir et dans le reconstitueur se trouve placée dans une ambiance d'air aseptisé qui élimine pratiquement tout risque de profilération de bactéries.

Si dans l'exemple de réalisation décrit précédemment la viande transformée est évacuée sans pratiquement entraîner d'introduction d'air ambiant à l'intérieur de l'appareil par le fait que le reconstitueur 4 coulisse simplement dans une fente, l'invention présente également de grands avantages lorsque l'évacuation de la matière se fait en ouvrant l'enceinte. En effet, dans ce cas, du fait de la circulation forcée d'air aseptisé et notamment de la formation de ce rideau d'air vertical enveloppant la zone de traitement, l'air ambiant qui s'introduit dans l'enceinte lors de l'ouverture n'a pratiquement aucun contact avec l'orifice de traitement puisqu'il est appelé à la partie haute de l'appareil. Si en général, il n'est pas nécessaire

d'aseptiser immédiatement l'air introduit dans l'enceinte de réserve, on peut éventuellement prévoir un système à rayonnement ultra-violet près de l'orifice d'entrée 8, fonctionnant éventuellement uniquement lors de la mise en route.

La figure 3 illustre un autre type d'installation réalisée conformément à l'invention, installation dans laquelle l'appareil de transformation est constitué simplement par un appareil de tranchage.

Dans ce mode de réalisation, comme précédemment, l'appareil 20 est disposé à l'intérieur d'une enceinte 1 dans laquelle on crée une circulation d'air aseptisé enveloppant d'une part, la matière stockée 21 et d'autre part, l'organe de découpe 22.

Si dans les exemples précédents, les installations conformes à l'invention ont été décrites pour fonctionner à température ambiante, il est évident qu'elles pourraient également être associées à des moyens permettant de les réfrigérer.

Par rapport aux dispositifs antérieurs, les dispositifs conformes à l'invention présentent de grands avantages par le fait que l'aseptisation de l'air supprime la contamination microbienne, détruit les germes les plus virulents et ceci de façon permanente. Ainsi, l'évolution microbienne dans la viande hâchée et dans la viande en attente est stoppée net.

Par ailleurs, si comme dit précédemment, un tel appareil peut être utilisé en milieu réfrigéré, il présente également l'avantage de pouvoir être utilisé en milieu ambiant ce qui entraîne une économie d'énergie, une absence de bruit et voire même une amélioration de la qualité de la viande qui n'est pas soumise à de brusques variations de température. De plus, l'aseptisation de l'air peut être obtenue soit par rayonnement ultra-violet comme décrit précédemment, soit par tout autre moyen équivalent par exemple à l'aide d'ozone.

REVENDICATIONS

1/ Installation permettant le stockage, la conservation et la transformation de produits alimentaires, notamment de la viande, se présentant sous la forme d'une enceinte fermée (1) du type comportant :

- une zone de stockage (3) de produit à transformer,
- un appareil de transformation (2) de ladite matière,
- une zone de réception (4) de la matière transformée à la sortie de l'appareil de traitement, ladite enceinte (1) comportant un accès permettant d'introduire le produit dans l'appareil de transformation et un accès permettant de récupérer la matière transformée, caractérisée par le fait qu'elle comporte des moyens (8, 9, 7, 6) permettant de créer une circulation d'air aseptisé qui enveloppe à la fois la zone de réserve (3) de matière, la partie active de l'appareil de transformation (2) et la zone de réception (4).

2/ Installation selon la revendication 1, caractérisée par le fait que la circulation d'air aseptisé à l'intérieur est réalisée de telle sorte que cet air forme un écran évitant le contact de l'air ambiant avec la zone de traitement lors de l'ouverture ou de la récupération de la matière traitée.

3/ Installation selon l'une des revendications 1 et 2 caractérisée par le fait que la circulation d'air aseptisé est un circuit continu qui passe au travers de la zone de stockage (3) puis est recyclé, de bas en haut, en enveloppant la partie active de l'appareil de transformation (2) et la zone de réception (4).

4/ Installation selon l'une des revendications 1 à 3, caractérisée par le fait que l'appareil de transformation (2) de la matière est un hâchoir, la circulation d'air aseptisé étant obtenue, d'une part en prévoyant dans la goulotte d'alimentation du hâchoir et éventuellement dans la zone de réserve qui l'entoure des perforations (8-9) permettant le passage de l'air, des moyens d'aspiration étant prévus à l'entrée de cette zone et l'air étant recyclé en dessous du hâchoir de manière à être amené en dessous de la sortie (4) pour former un écran qui enveloppe cette zone de transformation.

5/ Installation selon l'une des revendications 1 à 4, caractérisée par le fait que des déflecteurs (10-11) sont prévus en dessous et en dessus de l'orifice de sortie (4) de l'appareil de traitement afin de canaliser le courant d'air aseptisé.

6/ Installation selon l'une des revendications 1 ou 2, caractérisée par le fait que l'appareil de transformation de la matière est constitué par un appareil de tranchage.

7/ Appareil selon l'une des revendications 1 à 6, caractérisé par le fait qu'il fonctionne à température ambiante.

8/ Appareil selon l'une des revendications 1 à 6, caractérisé par le fait qu'il comporte des moyens de réfrigération à l'intérieur de l'enceinte.

FIG.1

FIG. 2

0037350

Office européen
des brevets

**RAPPORT DE RECHERCHE EUROPEENNE**

Numéro de la demande

EP 81 42 0040

| Catégorie | Citation du document avec indication, en cas de besoin, des parties pertinentes | Revendication concernée |
|---|---|---|
| | FR - A - 2 275 149 (MICARNA)<br>* page 2, ligne 6 à page 3, ligne 29; revendications *<br><br>-- | 1,2,6, 8 |
| | US - A - 2 196 080 (REYNOLDSON)<br>* page 2, colonne de droite, lignes 3-31 *<br><br>-- | 3,5 |
| | GB - A - 510 813 (SHEPHERD)<br>* revendications 2,3,4,9,10, 11,12,13 *<br><br>-- | 1,3 |
| | FR - A - 2 086 694 (HELY-JOLY)<br>* page 2, ligne 17 - page 3, ligne 30 *<br><br>-- | 4,5 |
| P | FR - A - 2 450 563 (GETPLAST)<br>* page 2, ligne 6 - page 3, ligne 30 *<br>& BE - A - 882 063<br><br>-- | 1,4,8 |
| A | FR - A - 2 428 982 (MANUFACTURE DE MACHINES DU HAUT'RHIN)<br>* revendication 1 *<br><br>-- | 1 |

**DOCUMENTS CONSIDERES COMME PERTINENTS**

**CLASSEMENT DE LA DEMANDE (Int. Cl.³)**

A 22 C 17/00
A 23 B   4/00

**DOMAINES TECHNIQUES RECHERCHES (Int. Cl.³)**

A 22 C
A 23 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&. membre de la même famille, document correspondant

./..

Le présent rapport de recherche a été établi pour toutes les revendications

| Lieu de la recherche | Date d'achèvement de la recherche | Examinateur |
|---|---|---|
| La Haye | 23.06.1981 | DE LAMEILLEURE |

OEB Form 1503.1   06.78

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| | **DOCUMENTS CONSIDERES COMME PERTINENTS** | |
| A | FR - A - 1 602 311 (HELY-JOLY) <br> * en entier * <br><br> -- | 1 |
| A | US - A - 3 975 548 (FRADIN) <br> * colonne 1, ligne 56 - colonne 2, ligne 28 * <br><br> -------- | 1 |

**CLASSEMENT DE LA DEMANDE (Int. Cl. 3)**

**DOMAINES TECHNIQUES RECHERCHES (Int. Cl. 3)**

OEB Form 1503.2   06.78